# EUROPEAN PATENT SPECIFICATION

(11) **EP 2 288 472 B1**
(45) Date of publication and mention of the grant of the patent: **25.07.2012**
(21) Application number: 09728076.2
(22) Date of filing: 30.03.2009
(51) Int. Cl.: B24C 1/04, B24C 3/32, E21B 23/04, E21B 29/00, E21B 29/12, E21B 43/114

(54) **ABRASIVE CUTTING FLUIDS**
ABTRAGEND WIRKENDE SCHNEIDFLUIDE
FLUIDES DE DÉCOUPE ABRASIFS

(30) Priority: 05.04.2008 GB 0806161; 02.06.2008 AU 2008902776
(43) Date of publication of application: 02.03.2011
(73) Proprietor: Well Ops UK Ltd, Aberdeenshire AB21 0BG (GB); Helix Well Ops SEA Pty Ltd., Cockburn Central, WA 6164 (AU)
(72) Inventor: EDWARDS, Jonathon, West Perth, WA 6005 (AU); BURNS, Alexender, Willetton, WA 6155 (AU); JONES, Robert, Canning Vale, WA 6155 (AU)
(74) Representative: Stanley, David William
(86) International application number: PCT/GB2009/050304
(87) International publication number: WO 2009/122202

(56) References cited:
- EP-A- 1 873 824
- WO-A-91/01852
- WO-A-97/40963
- WO-A-2008/001111
- GB-A- 2 288 350
- GB-A- 2 354 726
- US-A- 5 445 220
- US-A1- 2003 092 364

## Description

### TECHNICAL FIELD

The present invention relates to abrasive cutting fluids and is concerned particularly although not exclusively with cutting methods and apparatus for the severing of abandoned subsea wellheads from casing strings.

### BACKGROUND

Many subsea oil and gas fields throughout the world are worked out and are now being abandoned. The wellheads of such wells represent a hazard to commercial fishers and it is a requirement in many countries that they are permanently removed and the surrounding seabed returned to its pre-oil-or-gas production state. The most common method of removal is to blast the wellhead away, using a quantity of high explosives. This method suffers from a major disadvantage amongst others, in that the explosive force that has to be used kills the marine life in a large area surrounding the explosion. Additionally, if the explosion fails to blast the wellhead away, it becomes increasingly unlikely that further successive explosive attempts will easily complete the severance and consequently far more explosives are used than is absolutely necessary to ensure success. Of course, this leads to even greater devastation of marine life over a much larger area. Various proposals have been made for alternative and more environmentally-friendly methods for the severing of abandoned subsea oil and gas wellheads. In one such method, an abrasive grit is entrained in a high pressure water jet, which is then used to cut the casings attached to the wellhead. For example, a string of concentric casings located in the seabed can be subjected to a cutting medium ejected at high pressure from a nozzle at the end of a pipe. The objective is to cut through the casings such that their upper parts, and any associated wellhead, can be removed. However, in order to cut efficiently, the entrained grit must necessarily be very abrasive and this means that the pipe work taking the grit to the cutting nozzle is unable to withstand the abrasive effects of the grit for long periods of time. The pipe work can be long - e.g. 300 metres. Accordingly, the pipes and fittings in these prior proposals wear out, in many cases before the cut is completed, and the pipes have to be renewed. This is not an easy procedure and is very time consuming. Another known problem is that when a jet of water passes through water, the surrounding water absorbs a high percentage of the total energy of the high-pressure jet. This means that less energy is available for the cutting action of the jet and it consequently takes longer to perform the required work. Of course, this longer time requirement leads to more abrasive wear in the pipes and fittings.

It would be desirable to be able to provide one or more of the following: reduced cutting time, improved cutting performance or reduced wear in a conduit conveying the cutting medium.

Document WO 2008-001111 discloses entraining a pre-mix comprising abrasive, water and thickner into a carrier fluid of water.

### SUMMARY OF THE INVENTION

According to one aspect of the present invention, there is provided a method of forming an abrasive cutting fluid, comprising the steps of forming a pre-mix comprising particles of an abrasive material, water and a thickener; forming a carrier fluid comprising water and at least one thickener; and entraining the pre-mix in the carrier fluid, thereby to form the abrasive cutting fluid.

The resultant cutting fluid having the premix entrained in the carrier fluid may be output at pressure as an abrasive cutting fluid at a cutting zone. The premix may be formed as slurry.

The thickener may preferably include one or more flocculent and/or suspension agents. Preferably the thickener may be present in sufficient concentration in one or both of the pre-mix and carrier fluid to act as a viscosity modifier, for example, to promote laminar flow of the cutting fluid through the conduit. Laminar flow is also a function of velocity and so choosing the correct conduit sizes is important. We have realised that laminar flow within the conduit helps to reduce wear on the inside surface of the conduit through which the cutting fluid is carried, typically being a flexible hose or pipe, since in laminar flow the wall velocity is zero and hence there can be no abrasive wear. Reduction in wear in the conduit avoids the need to replace the conduit as often, thereby also reducing "downtime" of equipment and personnel and the financial costs related thereto. Also, improving flow within the conduit reduces energy losses in the cutting fluid, thus helping to promote more efficient cutting.

The thickener in the carrier fluid may comprise at least one flocculent (carrier fluid flocculent).

Preferably, the flocculent is a high molecular weight long chain polymer.

Preferably, the flocculent is at a concentration higher than the manufacturer's recommended concentration and may be present in relatively high concentrations, such as between 20% and 200% above a recommended concentration, more preferably between 50% and 120% above a recommended concentration, and yet more preferably between 80% and 100% above recommended concentration, and 100% is preferred. The term "recommended" means what would be an accepted or normally intended concentration. Preferably the carrier fluid flocculent is at lower concentration in the carrier fluid relative to the flocculent in the pre-mix (pre-mix flocculent).

Preferably, the thickener or flocculent in the pre-mix may be present in very high concentrations, such as between 100% and 2000% above a recommended concentration, more preferably between 300% and 1500% above a recommended concentration, and yet more preferably between 600% and 1100% above recommended concentration, and 800% is preferred. The term "recommended" means what would be an accepted or normally intended concentration.

A surprising outcome has been realised in that high concentration of flocculent helps to align the flow of the cutting fluid without affecting the ability of the dissolved flocculent to form a long chain polymer, and also act as a viscosity modifier to help to achieve laminar flow. The flocculent also helps to maintain the abrasive particles (abrasive grit) in suspension.

A further surprising outcome has also been realised in that when the premix is introduced into the carrier fluid the pre-mix tends to remain as a separate jet within the carrier fluid jet which, in turn, helps reduce wear in conduits and/or valves by insulating the wear inducing abrasive grit from the walls of those hoses and/or valves.

In the context of this specification, the term "abrasive grit", "abrasive material" or "abrasive particles" means any particulate material suitable for use in an abrasive cutting jet.

Preferably, the method includes the further step of passing the abrasive cutting fluid under pressure through a hose and exhausting the fluid at pressure through a nozzle at the end of the hose, as an abrasive cutting jet.

Preferably, the laminar flow may be established in any portion of the premix conduit and/or carrier fluid conduit.

Preferably the second flocculent is at lower concentration in the carrier fluid relative to the flocculent in the pre-mix (pre-mix flocculent). However, the second flocculent may still be at a much higher concentration than recommended by the manufacturers thereof, and preferably nearer that of the pre-mix flocculent.

Preferably, laminar flow may be established in or downstream of an entraining zone for the pre-mix and carrier fluid. The entraining zone may be in a chamber and/or portion of the conduit (e.g. hose or pipe). For example, the premix may be introduced into said chamber at or adjacent a longitudinal axis thereof, so that it joins said carrier fluid substantially in the centre of flow thereof.

Preferably, the pre-mix travels preferentially down the centre of a conduit, with the carrier fluid around it.

Preferably, said abrasive material includes grit particles of at least two different nominal sizes.

Preferably, the step of forming said pre-mix includes allowing the premix to dwell in a container for a period of time sufficient for the thickener to take effect.

Preferably, the step of forming said carrier fluid (fluid medium) includes allowing the water and thickener to dwell in a vessel for a period of time sufficient for the thickener to take effect.

Viscosity of the pre-mix may be greater than the viscosity of the carrier fluid (fluid medium) to assist and/or promote laminar flow in the conduit in use.

In another aspect the invention provides apparatus for forming an abrasive cutting fluid according to claim 13.

The apparatus may include a chamber through which the carrier fluid is arranged to pass, and means for introducing said pre-mix into said carrier fluid as it passes through said chamber.

The pre-mix may be entrained with the carrier fluid at a location remote from an underwater cutting zone and passed along a conduit to the underwater cutting zone.

The pre-mix may be entrained with the carrier fluid at or adjacent a surface station and passed down a conduit to an underwater cutting zone.

Preferably, the item to be cut includes at least part of a subsea wellhead and/or associated components.

### BRIEF DESCRIPTION OF THE DRAWINGS

For a better understanding of the invention, and to show how embodiments of the same may be carried into effect, reference will now be made by way of example to the accompanying diagrammatic drawings, in which:
Figure 1 is a schematic diagram of an underwater cutting apparatus according to an embodiment of the present invention;
Figure 2 shows a pressure vessel of the apparatus of Figure 1 in more detail;
Figure 3 illustrates a pre-mix slurry of an embodiment of the present invention;
Figure 4 shows an injection manifold of the apparatus of Figure 1 in more detail;
Figure 5 shows an injection manifold according to an alternative embodiment of the present invention;
Figures 6 and 7 are similar views that each show a cross-section of a pipe with a fluid in laminar flow according to an embodiment of the present invention; and
Figure 8 illustrates a string of concentric casings that are located in the seabed.

### DESCRIPTION OF PREFERRED EMBODIMENTS

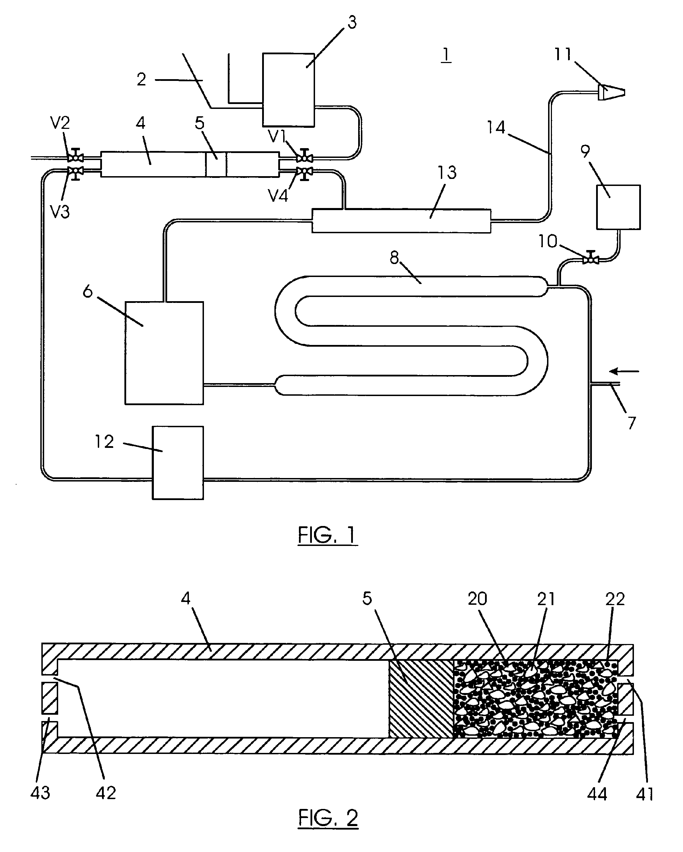

In the figures, like references denote like or corresponding parts. The apparatus 1 illustrated in Figures 1 to 7 and an example of its operation will now be described.

As a preliminary step, two sizes of abrasive grit are mixed together with a high concentration of flocculent and water to form a thick slurry. Mechanical mixing is a preferred method, as it gives an even distribution without causing excessive agitation that would cause the entrapment of air that would cause further problems when pumped at high pressures.

Typical grits that may be used include garnet, copper slag, crushed glass and olivine, amongst others. The two grit sizes may be respectively in the ranges 200µm - 600µm and 600µm - 1500µm. Preferably, one grit is in the range 2-3 times the size of the other. Here, the term "size" refers to largest particle size. The flocculent preferably has a high molecular weight.

One example of a suitable pre-mix "slurry" is as follows:
Grit A - Iron Silicate (fine grit) 35kg
Grit B - Iron Silicate (coarse grit) 25kg
Flocculent - Nalco H199 - 0.7 litres
Water - 28 litres

The slurry is placed in a tundish 2, which feeds a pump 3. The output of the pump 3 is connected via valve V1 to a port 41 of a pressure vessel 4, which has three further ports 42-44 to which respective valves V2, V3 and V4 are connected. The pressure vessel 4 contains a pig 5, which will be explained below. To fill the pressure vessel 4, valves V1, V3 and V4 are closed, and valve V2 is opened to allow any water in the vessel 4 at the left-hand side (as seen) of the pig 5 to be dumped. Valve V1 is opened and pump 3 is started, to pump slurry into the right hand side (as seen) of pressure vessel 4. This moves the pig 5 to the left (as seen). Pumping continues until the pump pressure rises to indicate that slurry completely fills that side of the pressure vessel 4. The pump 3 is then stopped and valves V1 and V2 are closed. A large high-pressure pump 6 is then started, which allows low-pressure water from feed point 7 to pass through a flocculent retention chamber 8 and then through the pump 6. As the water is about to enter the flocculent retention chamber 8, flocculent is added to the water from a flocculent tank 9, controlled by a metering valve 10 to give around twice the normal recommended commercial dosage (e.g. 0.6% by volume as against 0.3%). The flocculent added to the water from feed point 7 may be the same flocculent as used in the above-described pre-mix slurry.

It takes around 15 minutes for water to enter the flocculent retention chamber 8, pass through the flocculent retention chamber 8 and be drawn into the pump 6. This allows sufficient time for the flocculent-water mix to attain a long-chain structure. This is achieved by selecting the chamber volume to be about 15 times the delivery rate of the pump in volume per minute. At this time, a high pressure jet emerges from a nozzle 11, which is located at one end of a high-pressure, flexible hose 14.

A small high-pressure pump 12 is then started and valves V3 and V4 are opened. Pump 12 forces flocculated water 26 to the left hand side (as seen) of the pressure vessel 4, which moves the pig 5 axially to the right, along the bore of the pressure vessel 4. Grit slurry from the right-hand side of the pressure vessel 4 is now forced into an injection manifold 13 and into the flocculated water, which is passing already in a laminar flow through the manifold 13. This process continues until the pressure vessel 4 is empty.

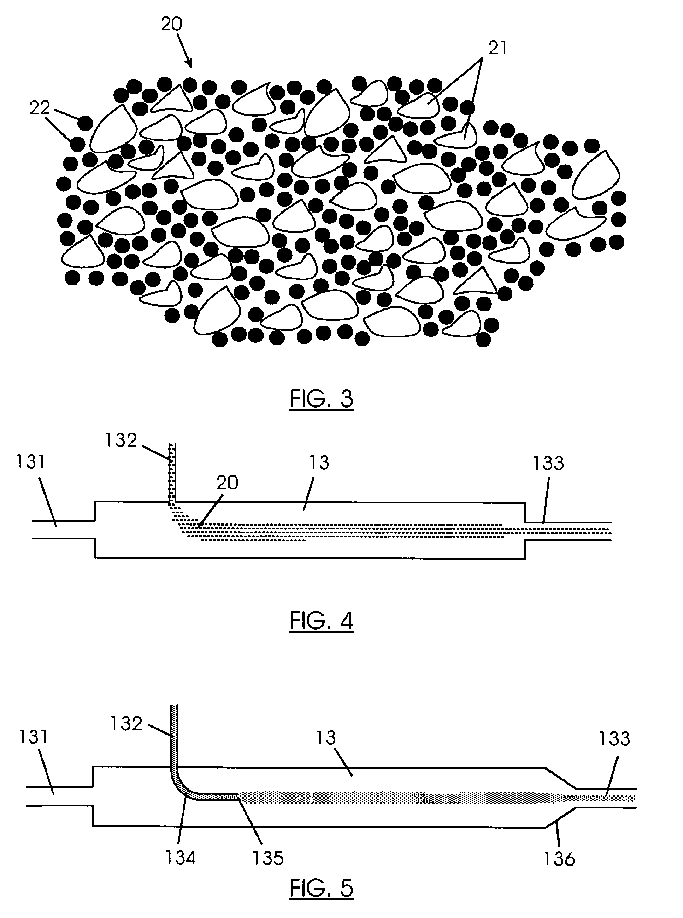

Figure 2 shows the pressure vessel 4 in more detail. Ports 41-44 are connected by pipework (not shown) to valves V1-V4 respectively. The pig 5 has the form of a plunger that is free to move within the pressure vessel 4, under the influence of the pressure prevailing within it. At the right hand side of the pig 5, there is shown the premixed slurry 20. For clarity, this is shown in Figure 2 to an enlarged scale and the slurry is shown to a yet greater scale in Figure 3. Grit A particles are indicated by reference 21, and the smaller Grit B particles by reference 22. The grit particles 21, 22, together with the flocculent suspension, make up the slurry 20, which is supplied from the pump 3, as explained above.

As shown in Figure 4, the injection manifold 13 comprises a main inlet port 131, which receives the flocculated water supplied from the high-pressure pump 6, at a relatively high flow rate (e.g. 110 litres/min), and a secondary inlet port 132, which receives the pre-mixed slurry 20 from the pressure vessel 4, via valve V4, at a significantly lower flow rate (e.g. 20 litres/min). The two flows from the inlet ports 131 and 132 are combined within the injection manifold 13 and exit via an outlet port 133, at a combined flow rate of, for example, 130 litres/min. In Figure 4, the secondary inlet port 132 terminates at the side wall of the injection manifold 13. The high velocity of the fluid within the injection manifold 13 assists in drawing the slurry 20 from the secondary inlet port 132 towards the centre of the manifold 13, as illustrated in Figure 4.

Figure 5 illustrates a variant of the injection manifold 13. The general mode of operation is similar to that of Figure 4. However, in Figure 5, the secondary inlet port 132 is provided with a pipe 134 that terminates in a right 25 angle bend, such that the mouth 135 of the pipe 134 is located centrally of the injection manifold 13 and is substantially coaxial with it. As illustrated in Figure 5, this further assists in placing the pre-mixed slurry 20 along the centre axis of the injection manifold 13.

Entraining (injecting) the pre-mix into the centre of flow of the carrier fluid has been found to be beneficial because in a laminar flow regime the grit will be primarily in the centre of the cutting fluid with the carrier fluid providing a "lubricating" buffer between the grit slurry and the walls of the conduit. Thus, the grit slurry is supported in the cutting fluid by a lubricating layer against the hose or pipe wall. This reduces wear on the inside walls of the hose or pipe and also is envisaged to allow the slurry to travel faster due to less drag in the hose/pipe with resultant cutting energy gains over known systems.

A further variation of Figure 5 is that the end walls 136 of the manifold, adjacent the outlet port 133, are inclined at an angle of about 45°. This reduces the likelihood of turbulence within the fluid flow, helping to keep the slurry 20 in the centre of the flow and to promote a generally laminar flow profile.

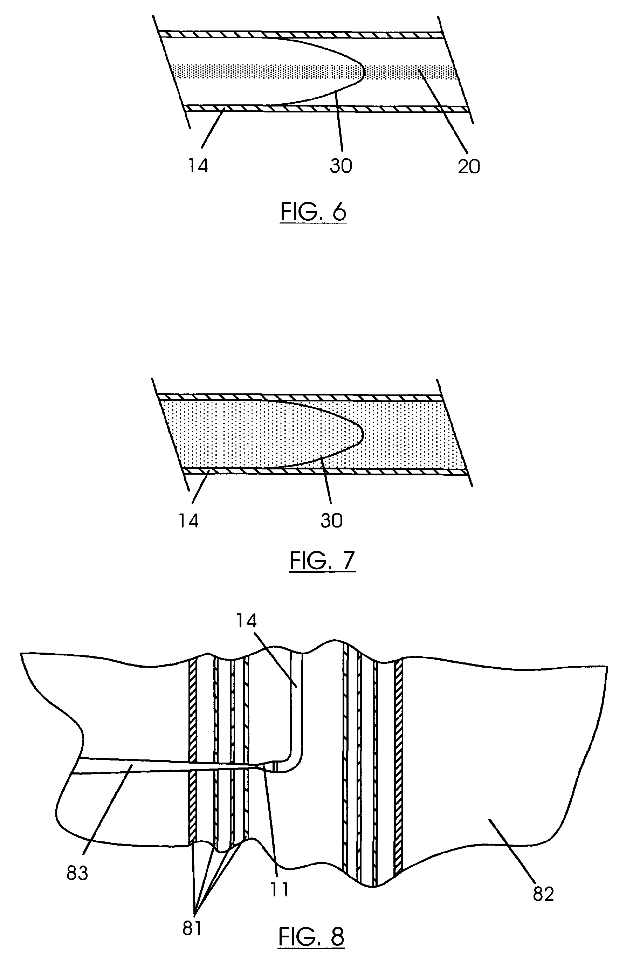

Figure 6 illustrates a section of pipe 14 that receives the fluid output of injection manifold 13. As may be seen, the slurry 20 is principally maintained at the centre of the flow, along the axis of the pipe 14. The conditions are such as to induce laminar flow, of which a velocity profile is indicated by reference 30. By selecting a relatively large diameter high-pressure hose as the pipe 14 for the transmission of the combined flow from the injection manifold 13, the velocity of the combined flow may be a low number which means, in turn, that the Reynolds Number may also be low, which is one criterion for promoting laminar flow in the pipe 14.

As the velocity profile 30 indicates, the relative velocity of the fluid at the walls of the pipe 14 is substantially zero, increasing to a maximum at the central axis of the pipe 14. Because there is zero (or very low) velocity adjacent the inner pipe wall, there is little wear on the pipe 14. This holds true, even if particles from the slurry 20 end up adjacent the pipe wall 14. The latter situation is illustrated in Figure 7, where the slurry 20 has become dispersed throughout the fluid. As there is zero or very low velocity adjacent the wall of the pipe 14, this leads to minimal wear of the pipe 14.

However, the preferred realisation is as shown in Figure 6, where the slurry 20 effectively travels down the centre of the pipe 14, disposed coaxially within the surrounding carrier fluid. In this way, although the slurry 20 and surrounding carrier fluid are entrained together at the manifold 13, conveniently located at a surface station (at or adjacent the water surface), they travel the considerable distance down the pipe 14 in concentric layers until they reach the nozzle 14 where, at the last moment, they are subjected to turbulent mixing as they are ejected to form the cutting jet.

In order to promote laminar flow down the pipe 14, a suitably large diameter of pipe is chosen in relation to the flow rate to ensure that the flow remains laminar and does not become turbulent. The requirements for this will be well understood by the skilled reader familiar with fluid mechanics. Also, it is desirable to avoid sharp bends in the run of pipeline - e.g. in connectors, smooth curves are preferred to right angle elbows. Where the pipe 14 is connected to the nozzle 11, it also desirable to provide smooth surfaces up to the inlet orifice of the nozzle.

Introducing the slurry 20 into its carrier fluid at or adjacent a surface station and sending these components down a single pipe to the nozzle under laminar flow conditions is much more efficient than supplying the components to the nozzle (or a mixing unit at or adjacent the nozzle) in separate pipes.

Although it is convenient to introduce the slurry into its carrier fluid at or adjacent a surface station, this could possibly be done in a subsea location, although at a remote location from the nozzle. Thus, the benefits are retained of sending the components through a single pipe (or hose) to the nozzle under laminar flow conditions, the distance travelled by the components through the single pipe being large relative to the lengths of pipes and/or connectors at or adjacent the nozzle and/or between a mixing unit at or adjacent the nozzle and the nozzle itself.

By having a pair of pressure vessels 4 arranged in parallel, it is possible to fill one vessel whilst the other is being used and to keep swapping over. The size of each pressure vessel 4 is chosen such that it takes at least as long to empty it as it takes for the flocculent-water mixture to pass through the chamber 8. In this way, when the first vessel 4 is empty, the second one contains a slurry having properties at optimum values. More than two pressure vessels 4 may be arranged in parallel, dependent upon required delivery rates, size of pressure vessels, and desirable dwell times of slurry in the pressure vessels 4 to ensure long chain polymer formation.

A mixture of grit sizes is used to prevent grit from settling at the bottom of the pressure vessel 4 before being fed into the injection manifold 13. The smaller grit particles fit between the larger ones to provide suspension stability. Of course, if settling did occur, then only the flocculated water of the slurry would be injected into the injection manifold 13 and cutting would not occur, since the abrasive grit would be missing within the jet.

Although, in the above-described apparatus and methods, the pumps are started and stopped to regulate the high-pressure supplies, in other embodiments further additional bypass valves could be included so as to allow the pumps to run continuously and to allow high-pressure water from the smaller high-pressure pump 12 to be diverted to the injection manifold 13 when it is not required for pressurising the pig 5.

As the reader will appreciate, it is readily possible to fully automate the illustrated apparatus and methods by controlling the mixing of the slurry, the opening and closing of valves, and the regulation of pressures by means of automatic control devices, such as programmable logic controllers and computers, for example. The slurry may be mixed immediately before it is introduced into the pressure vessel(s) 4, where it is left for a period of time sufficient for long-chaining of flocculants or suspension agents to take place.

In other embodiments, it may be particularly advantageous to drive the two high-pressure pumps 6, 12 from a single engine so as to preserve any desirable pump pressure relationships. Although the illustrated and above-described apparatus and methods are for underwater cutting, they may be used to provide a cutting jet in other environments.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. A method of forming an abrasive cutting fluid, comprising the steps of:
a. forming a pre-mix (20) comprising particles of an abrasive material (21, 22) water and a thickener;
b. forming a carrier fluid comprising water and at least one thickener; and
c. entraining the pre-mix (20) in the carrier fluid, thereby to form the abrasive cutting fluid.

2. A method according to claim 1, comprising outputting the abrasive cutting fluid at pressure at a cutting zone.

3. A method according to claim 2, wherein the cutting zone is an underwater cutting zone and the method includes the step of directing a jet of the fluid, underwater, at an item to be cut.

4. A method according to claim 3, wherein the item to be cut includes at least part of a casing string and/or components associated with a subsea wellhead.

5. A method according to claim 3 or 4, wherein the pre-mix is entrained with the carrier fluid at a location remote from the underwater cutting zone and passed along a conduit to the underwater cutting zone.

6. A method according to claim 5, wherein the pre-mix is entrained with the carrier fluid at or adjacent a surface station and passed down a conduit to the underwater cutting zone.

7. A method according to any of the preceding claims, comprising using at least one flocculent as the pre-mix thickener.

8. A method according to any of the preceding claims, comprising using at least one flocculent as the thickener in the carrier fluid.

9. A method according to any of the preceding claims, wherein the thickener in the carrier fluid is provided at lower concentration than the thickener concentration in the pre-mix.

10. A method according to any of the preceding claims, comprising establishing laminar fluid flow in or downstream of an entraining zone of the premix and carrier fluid.

11. A method according to any of the preceding claims, comprising introducing the pre-mix into a central region in a direction of flow of the carrier fluid, such that the pre-mix travels principally down the centre of a conduit, with the carrier fluid around it.

12. A method according to any of the preceding claims, wherein said particles of abrasive material comprise grit particles of at least two different nominal sizes.

13. An apparatus for forming an abrasive cutting fluid, the apparatus comprising:
a. means (2, 3, 4) for forming a pre-mix (20) comprising particles (21, 22) of an abrasive material, water and a thickener; the apparatus containing the premix (20)
b. means for forming a carrier fluid comprising water and at least one thickener; the apparatus containing the carrier fluid and
c. means for entraining the pre-mix in the carrier fluid, thereby in operation, to form the abrasive cutting fluid.

14. An apparatus according to claim 13 and arranged to perform a method according to any of claims 2 to 12.

## Patentansprüche

1. Verfahren zum Ausbilden einer abrasiven Schneidflüssigkeit, folgende Schritte umfassend:
a. Ausbilden einer Vormischung (20), die Partikel eines abrasiven Materials (21, 22), Wasser und ein Verdickungsmittel umfasst;
b. Ausbilden einer Trägerflüssigkeit, die Wasser und zumindest ein Verdickungsmittel umfasst; und
c. Einbinden der Vormischung (20) in die Trägerflüssigkeit, um dadurch die abrasive Schneidflüssigkeit auszubilden.

2. Verfahren nach Anspruch 1, umfassend das Abgeben der abrasiven Schneidflüssigkeit unter Druck an einen Schneidbereich.

3. Verfahren nach Anspruch 2, wobei der Schneidbereich ein Unterwasserschneidbereich ist und das Verfahren den Schritt des Richtens eines Strahls der Flüssigkeit unter Wasser auf einen Gegenstand, der geschnitten werden soll, enthält.

4. Verfahren nach Anspruch 3, wobei der Gegenstand, der geschnitten werden soll, zumindest einen Teil einer Rohrfahrt und/oder Bauteile in Verbindung mit einem Unterseebohrlochkopf enthält.

5. Verfahren nach einem der Ansprüche 3 oder 4, wobei die Vormischung an einer Stelle, die von dem Unterwasserschneidbereich entfernt liegt, in die Trägerflüssigkeit eingebunden wird und entlang einer Leitung zum Unterwasserschneidbereich durchgeführt wird.

6. Verfahren nach Anspruch 5, wobei die Vormischung an oder benachbart einer Oberflächenstation in die Trägerflüssigkeit eingebunden wird und durch eine Leitung zum Unterwasserschneidbereich hinunter geführt wird.

7. Verfahren nach einem der vorhergehenden Ansprüche, umfassend das Benutzen von zumindest einem Flockungsmittel als Vormischungsverdickungsmittel.

8. Verfahren nach einem der vorhergehenden Ansprüche, umfassend das Benutzen von zumindest einem Flockungsmittel als Verdickungsmittel in der Trägerflüssigkeit.

9. Verfahren nach einem der vorhergehenden Ansprüche, wobei das Verdickungsmittel in der Trägerflüssigkeit in niedrigerer Konzentration als der Verdickungsmittelkonzentration in der Vormischung vorgesehen ist.

10. Verfahren nach einem der vorhergehenden Ansprüche, umfassend das Bilden einer laminaren Flüssigkeitsströmung in oder stromabwärts von einem Einbindungsbereich der Vormischung und der Trägerflüssigkeit.

11. Verfahren nach einem der vorhergehenden Ansprüche, umfassend das derartige Einleiten der Vormischung in einen mittleren Bereich in einer Strömungsrichtung der Trägerflüssigkeit, dass die Vormischung mit der sie umgebenden Trägerflüssigkeit hauptsächlich in der Mitte einer Leitung hinunterläuft.

12. Verfahren nach einem der vorhergehenden Ansprüche, wobei die Partikel aus abrasivem Material Kornpartikel mit zumindest zwei unterschiedlichen Nennmaßen umfassen.

13. Vorrichtung zum Ausbilden einer abrasiven Schneidflüssigkeit, die Vorrichtung umfassend:
a. Mittel (2, 3, 4) zum Ausbilden einer Vormischung (20), die Partikel eines abrasiven Materials (21, 22), Wasser und ein Verdickungsmittel umfasst; wobei die Vorrichtung die Vormischung (20) enthält;
b. Mittel zum Ausbilden einer Trägerflüssigkeit, die Wasser und zumindest ein Verdickungsmittel umfasst; wobei die Vorrichtung die Trägerflüssigkeit enthält; und
c. Mittel zum Einbinden der Vormischung in die Trägerflüssigkeit, um im Betrieb dadurch die abrasive Schneidflüssigkeit auszubilden.

14. Vorrichtung nach Anspruch 13, die zum Ausführen eines Verfahrens nach einem der Ansprüche 2 bis 12 angeordnet ist.

## Revendications

1. Procédé de formation d'un fluide de coupe abrasif, comprenant les étapes de :
a. formation d'un pré-mélange (20) comprenant des particules d'un matériau abrasif (21, 22), de l'eau et un épaississant ;
b. formation d'un fluide porteur comprenant de l'eau et au moins un épaississant ; et
c. entrainement du pré-mélange (20) dans le fluide porteur, pour former ainsi le fluide de coupe abrasif.

2. Procédé selon la revendication 1, comprenant la sortie du fluide de coupe abrasif en pression sur une zone de coupe.

3. Procédé selon la revendication 2, dans lequel la zone de coupe est une zone de coupe sous l'eau et le procédé comprend l'étape de diriger un jet du fluide, sous l'eau, sur un article à découper.

4. Procédé selon la revendication 3, dans lequel l'article à découper comprend au moins une partie d'une colonne de tubage et/ou des composants associés à une tête de puits sous-marine.

5. Procédé selon la revendication 3 ou 4, dans lequel le pré-mélange est entraîné avec le fluide porteur sur un endroit éloigné de la zone de coupe sous l'eau et passé le long d'un conduit vers la zone de coupe sous l'eau.

6. Procédé selon la revendication 5, dans lequel le pré-mélange est entraîné avec le fluide porteur sur ou adjacent à un poste de surface et passé vers le bas le long d'un conduit en direction de la zone de coupe sous l'eau.

7. Procédé selon l'une quelconque des revendications précédentes, comprenant l'utilisation d'au moins un floculant en tant qu'épaississant du pré-mélange.

8. Procédé selon l'une quelconque des revendications précédentes, comprenant l'utilisation d'au moins un floculant en tant qu'épaississant dans le fluide porteur.

9. Procédé selon l'une quelconque des revendications précédentes, dans lequel l'épaississant dans le fluide porteur est fourni à une concentration inférieure à la concentration de l'épaississant dans le pré-mélange.

10. Procédé selon l'une quelconque des revendications précédentes, comprenant l'établissement d'un écoulement de fluide laminaire dans ou en aval d'une zone d'entraînement du pré-mélange et du fluide porteur.

11. Procédé selon l'une quelconque des revendications précédentes, comprenant l'introduction du pré-mélange dans une zone centrale dans une direction d'écoulement du fluide porteur, de telle façon que le pré-mélange circule principalement vers le bas du centre d'un conduit, avec le fluide porteur autour de lui.

12. Procédé selon l'une quelconque des revendications précédentes, dans lequel lesdites particules de matériau abrasif comprennent des particules de gravier d'au moins deux tailles nominales différentes.

13. Appareillage pour former un fluide de coupe abrasif, l'appareillage comprenant :
a. des moyens (2, 3, 4) pour former un pré-mélange (20) comprenant des particules d'un matériau abrasif (21, 22), de l'eau et un épaississant ; l'appareillage comprenant le pré-mélange (20) ;
b. des moyens pour former un fluide porteur comprenant de l'eau et au moins un épaississant ; l'appareillage comprenant le fluide porteur ; et
c. des moyens pour entraîner le pré-mélange dans le fluide porteur, pour former ainsi, en fonctionnement, le fluide de coupe abrasif.

14. Appareillage selon la revendication 13 et agencé pour mettre en oeuvre un procédé selon l'une quelconque des revendications 2 à 12.
